# NEW EUROPEAN PATENT SPECIFICATION

(11) **EP 0 158 820 B2**
(45) Date of publication and mention of the opposition decision: **19.03.1997**
(45) Mention of the grant of the patent: 22.06.1988
(21) Application number: 85102757.3
(22) Date of filing: 11.03.1985
(51) Int. Cl.: B23B 51/02

(54) **Drill**
Bohrer
Foret

(30) Priority: 12.03.1984 JP 34145/84 U
(43) Date of publication of application: 23.10.1985
(73) Proprietor: SUMITOMO ELECTRIC INDUSTRIES, LTD., Osaka-shi, Osaka 541 (JP)
(72) Inventor: Kunimori, Nagatoshi, Itami-shi Hyogo-ken (JP); Mori, Yoshikatsu, Itamishi Hyogo-ken (JP); Jindai, Mosaaki, Itami-shi Hyogo-ken (JP)
(74) Representative: Grünecker, Kinkeldey, Stockmair & Schwanhäusser Anwaltssozietät

(56) References cited:
- EP-A- 0 127 009
- EP-A- 0 127 009
- DE-A- 2 851 183
- DE-A- 3 131 794
- DE-C- 594 043
- DE-C- 594 043
- DE-C- 709 460
- DE-C- 3 205 051
- DE-U- 8 203 911
- FR-A- 887 811
- FR-A- 1 068 867
- FR-A- 1 190 274
- PL-A- 56 896
- US-A- 1 407 546
- US-A- 3 040 605
- US-A- 3 564 947
- US-A- 4 373 839
- MACHINES PRODUCTION, no. 365, 18 November 1983, pages 37-38, Sofetec, Boulogne, FR; "Perçage en CNC: nécessité d'une pointe de foret correcte"
- Bohrmeister Gühring 14/76
- Bohrmeister Gühring 24/83
- Bohrmeister Gühring 23/82
- Gühring Firmenbroschüre "Der Spiralbohrer und seine wirtschaftliche Anwendung" 1974
- Machines Production, Nr. 265, 18.11.83, Seiten 37, 38
- Technische Rundschau, Nr. 40 und 41, Oktober 79, Auszug aus dem Aufsatz "Bohreranschliffe"

## Description

This invention relaties to a spiral drill having the following features: the drill has two flutes, the drill comprises a drill body with a one-piece tip harder than the body, the tip comprises cutting lips and is fitted and fixed in a groove, with opposite parallel flat side walls, which is formed in the front end of said drill body, the web thickness is 25-35% of the drill diameter, the flute-to-land peripheral length ratio is in the range of 0,4:1 to 0,8:1, the front end of the drill is formed so that in each point in the portion of the cutting lip being spaced at least 1/3 of the drill diameter radially outward from the axis of the drill the respective radial rake angle is in the range of -5° to positive in an increasing sense when considering subsequent points along the cutting lip in a radially outward direction of view.

Such a spiral drill is disclosed in DE―C―594 043.

Generally, drills of high speed steel have heretofore been used in drilling steel and cast iron work. However, today when there is much need to maximize the efficiency of drilling operations, there are many cases where the drill rpm (cutting speed) is increased to meet this need. Under such circumstances, increasing use is being made, as a drill material, of cemented carbide, which is superior in wear resistance. However, cemented carbide is inferior in cross-break strength to high speed steel and hence it is not a satisfactory material so far as the strength required for withstanding cutting resistance is concerned. For this reasons, with the same construction as in conventional high speed drills it is impossible to fully develop the performance of cemented carbide drills and they can be used only under moderate cutting conditions.

In drilling operations, the quality of chip ejecting function influences cutting resistance. The greater the drilling depth, the greater the cutting resistance, thus making it necessary to improve chip ejecting function so as to prevent increase of cutting resistance. This is a matter of great importance particularly to cemented carbide drills.

A drill which has solved the aforesaid problems of cross-break strength and chip ejecting function is disclosed in Europen Patent No. 0127009.

However, this drill disclosed in EP―A―0127009 is made of cemented carbide alloy or the like in its entirety.

Thus, if the drill diameter is comparatively small and hence the bulk of the entire drill is not much, making the entire drill of a hard material, e.g., a cemented carbide alloy, would not cost much since the amount of cemented carbide alloy used is small and so is the number of processing steps involved.

However, where medium- and large-sized drills are to be produced, making such drill entirely of a cemented carbide alloy would naturally result in an increased amount of cemented carbide alloy used and in an increased number of processing steps involved, leading to a disadvantage of high cost.

As for a drill construction entirely different from that of the aforesaid drill, there have been proposed various arrangements including one, as disclosed in Japanese Patent Laying-Open Gazette No. 116795/1979, wherein a throwaway tip is attached to the cutting end of the drill structure. However, this type of conventional throwaway tips is so designed that a plurality of throwaway tips, rather than a single one, form the cutting lips. If, therefore, the drilling speed is increased to perform high speed drilling, there would be a problem that the cutting end of the drill body chatters. Further, where the tips are not symmetrically attached to the drill body, there would be a problem that balance of symmetry with respect to the center of rotation of the drill structure cannot be secured. Further, because of the low attaching strength, there has been a problem that a severe vibration is produced during drilling.

From DE-A-3 131 794 a drill is known, in which two cutting edges are provided on inserts of a different material attached to a shaft, namely two diametrically extending separate tips (inserts). A drill formed by a shaft and a one-piece insert attached to the front end of the shaft, and extending across the full diameter of the shaft, into the ranges of two diametrically arranged helical flutes is neither disclosed nor hinted at in the state of the art document DE-A-3 131 794. The "flute-to-land peripheral length ratio" disclosed for the drill according to the document DE-A-3 131 794 is according to claim 1 thereof, in the range of 0.02:1 to 0.5:1, with the preferred range according to claim 2 thereof being 0.1:1 to 0.3:1. Furthermore, the construction of this known drill is differing in many features and in their respective combination of features in principle, from the type of drill to which the invention relates. In this known drill the regular formation of the portion of each cutting edge near the periphery is an straight line formation. The cutting edges of the drill according to DE-A-3 131 794, each have a step contour.

An example of a drill having a cemented carbide alloy tip attached to the cutting end is disclosed in Japanese Patent Laying-Open Gazette No. 46928/1981. More particularly, a drill structure is disclosed therein wherein the cutting end of the drill body is formed with a groove and plate-like tip of cemented carbide alloys is fitted and fixed in said groove. In this case, a single cemented carbide alloy tip forms the lips in their entirety and hence the disadvantage found in the arrangement of Japanese Patent Laying-Open Gazette No. 116795/1979 described above has been eliminated.

In the arrangements disclosed in Japanese Laying-Open Patent Application Nos. 46928/1981 and 116795/1979, however, the aforesaid problems of cross-break strength and chip ejecting function have not been solved.

Accordingly, a main object of this invention is to provide an inexpensive drill structure which solves the aforesaid various problems and which has a decreased cutting resistance and an improved chip ejecting function, thus ensuring smooth chip ejection and rendering the drill suitable for high speed drilling.

According to claim 1, a drill of the known type is characterised in that
(c4) the portion of the cutting lip (10) spaced at least 1/3 of the drill diameter toward the outer peripheral side is concave arcuate,
(c5) the distance L < 47% of the drill diameter (D) seen in an end view of the cutting end, wherein:
   - a straight line (ℓ) is defined by two points P1 and P2,
   - P1 = outer circumferential point of the cutting lip (10),
   - P2 = point on the cutting lip (10) having a distance of 2/3 of the radius from the axis of the drill,
   - a line is drawn through point P1 perpendicular to the straight line (ℓ),
   - P3 = outer circumferential point of the flute wall (13), and
   - L = the distance of the perpendicular line to point P3,
(c6) said hard tip (9) consists of cemented carbide alloy and has been subjected to a thinning treatment, and the width of the chisel formed by said thinning is in the range of 0-0.4 mm, and the cutting lips (21) formed on the web portion when viewed from the front end of said drill structure are substantially straight, and the angle (θ₁) between each of said cutting lips and the respective outer peripheral cutting lip (10) formed on the outer periphery of the drill structure is in the range of 35°-45°, and the connecting portion between each cutting lip (21) of said web portion and the respective outer peripheral cutting lip (10) is in the form of a convex arc with respect to the direction of rotation of the drill structure,
(c7) the axial rake angle (θ₂) of the cutting lip (21) of the web portion formed by thinning is in the range of -5° to +5° and the length of said rake surface (23) in the direction of the axis of the drill structure is 0 mm at the axis position, and the intersection line between said rake surface and the adjacent ground surface (24) which is simultaneously formed by said thinning forms an angle (θ₃) in the range of 25°-60° with the axis of the drill structure.

Thus, in the practice of this invention, there is obtained an inexpensive spiral drill wherein even if the drill is rotated at high speed, the cutting resistance is low and smooth chip ejection is ensured.

In a particular embodiment of this invention, the thickness of the hard tip is greater than the web thickness, whereby damage due to chips produced from drilling can be effectively avoided.

Further, the hard tip may be coated with TiC, TiCN, TiN or Al₂O₃ to further increase wear resistance; the coating with this type of material may extend also to other areas of the drill structure in addition to the hard tip.

These objects and other objects, aspects and advantages of the present invention will become more apparent from the following detailed description of the present invention when taken in conjunction with the accompanying drawings.
Fig. 1 is a side view of an embodiment of this invention;
Fig. 2 is a front view of the embodiment of Fig. 1, looking at the cutting end of the drill;
Fig. 3 is a sectional view taken along the line III―III of Fig. 1;
Fig. 4 is a perspective view showing how a hard tip is installed in a groove formed in the cutting end of the drill shown in Fig. 1;
Fig. 5 is a front view for explaining a thinning treatment applied to the embodiment shown in Fig. 1;
Fig. 6 is a cutting end view looking at the front end of the drill structure shown in Fig. 1;
Figs. 7 and 8 are cutting end views looking at the front ends of drill structures in Comparative Examples 1 and 2, the views corresponding to Fig. 6;
Fig. 9 are diagrams, showing the measured values concerning the Horse power, the Torque and the Thrust relative to different cutting speeds, comparing the embodiment of the invention with the Comparative Examples 1 and 2;
Fig. 10 is an end view for explaining chip ejection associated with the end configuration shown in Fig. 6, the view looking at the cutting end of the drill structure in drilling operation;
Figs. 11 and 12 are views, corresponding to Fig. 10, of the cutting ends of the drill structures in Comparative examples 1 and 2 shown in Figs. 7 and 8, the drills being in operation;
Fig. 13 is a view for explaining the accuracy of the drilled surface of a sample drilled by use of the embodiment shown in Fig. 1;
Figs. 14 and 15 are views showing the accuracy of the drilled portions of samples drilled by use of the drill structures of Comparative Examples 1 and 2 shown in Figs. 7 and 8, the views corresponding to Fig. 13;
Fig. 16 is a view showing chips produced in drilling operation using the embodiment shown in Fig. 1;
Figs. 17 and 18 are views showing chips produced in drilling operation using the drill structures of Comparative Examples 1 and 2;
Fig. 19 is an enlarged side view of a portion of the cutting end, taken in the direction of arrow A in Fig. 5;
Fig. 20 is an enlarged side view of a portion of the cutting end of the drill, taken in the direction of arrow B in Fig. 5;
Fig. 21 is an enlarged plan view of the cutting end of the drill for explaining relative distance.

### Description of preferred embodiments

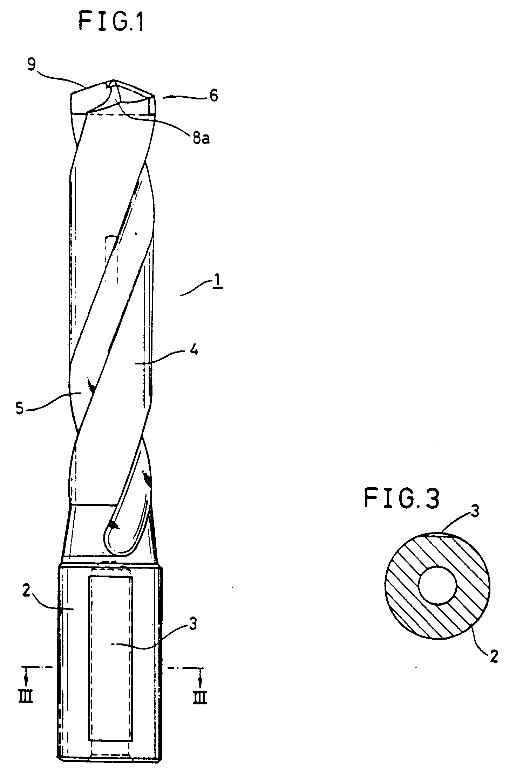

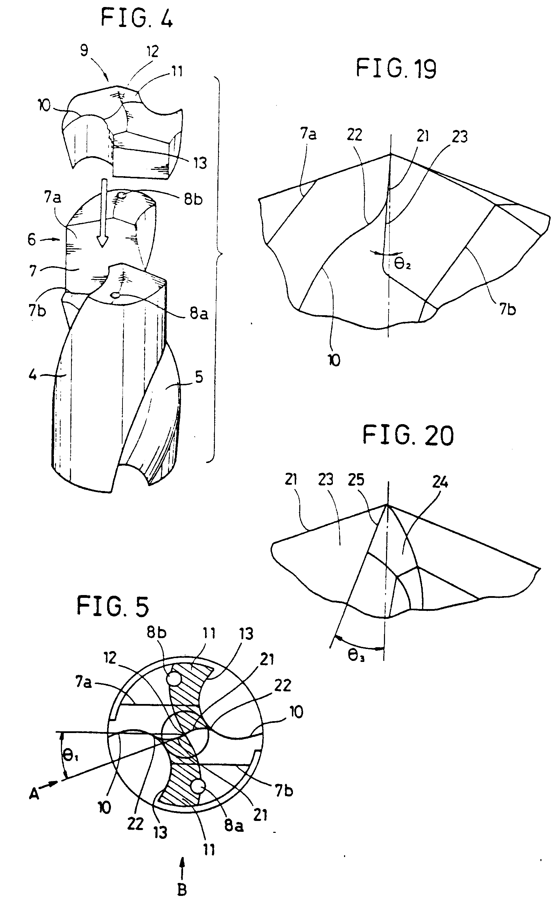

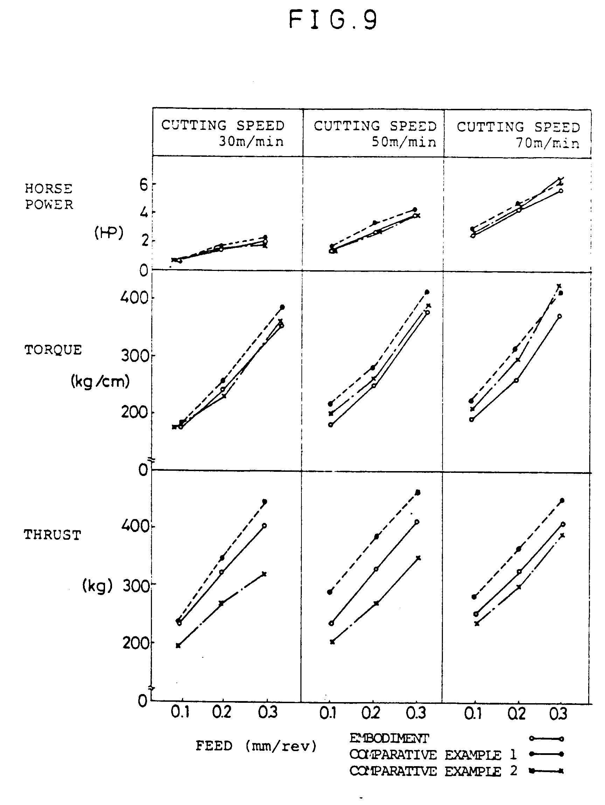

As shown in a side view in Fig. 1, a drill structure 1 according to this embodiment has a flat surface 3 formed on its shank 2 for attaching the drill structure to grip means such as a chuck. The drill body 4, smaller in diameter than the shank 2, is formed with two flutes 5 having a predetermined twist angle, as is the case with the conventional drill structure. The cutting end 6 of the drill body 4 is formed with a groove 7 extending at right angles with the axis of the drill body 4, as shown in Fig. 4. The center of the groove 7 coincides with the axis of the drill body 4, and the opposite wall surfaces, i.e., opposite lateral surfaces 7a and 7b of said groove 7 are flat.

On the other hand, as shown in Fig. 4, a hard tip 9 is fitted in the groove 7 and fixed therein as by soldering. With this hard tip 9, as will be later described, the cutting lips are all formed of this hard tip 9, with the result that balance of symmetry with respect to the center of rotation of the drill during drilling operation with cutting lips 10 is reliably and easily attained.

In addition, in the drill structure shown in Fig. 1, the shank 2 and drill body 4 may be made of high speed steel, for example. Further, the hard tip 9 may be made of cemented carbide alloy, high speed steel, cubic boron nitride sintered compact (CBN sintered compact) or other hard material. Preferably, the hard tip 9 made of cemented carbide alloys is used. More particularly, the surface of the hard tip 9 is coated with TiC, TiCN, TiN or Al₂O₃.

In addition, in Figs. 1 and 2, 8a and 8b denote oil passages extending from the front end of the cutting portion 6 to the base end of the shank 2.

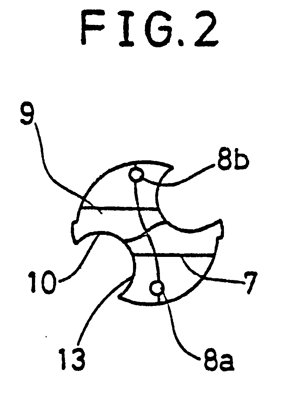

The construction of the hard tip 9 will now be described. The hard tip 9 has a thickness, or length along the axis of the drill body 4, equal to at least the web thickness of the front end of the drill body 4 and is so formed as to serve as an arcuate chip breaker. In the drill structure shown in Figs. 1 and 2 wherein the hard tip 9 is united with the groove 7 in which it is fixed, the web thickness is 25―35% of the drill diameter, the flute width ratio, defined as the flute to land prepared length ratio, is 0.4:1 to 0.8:1, and the rake angle of each outer cutting lip 10 measured at positions spaced at least 2/3 of the drill diameter radially outward from the drill center is in the range of -5° to positive.

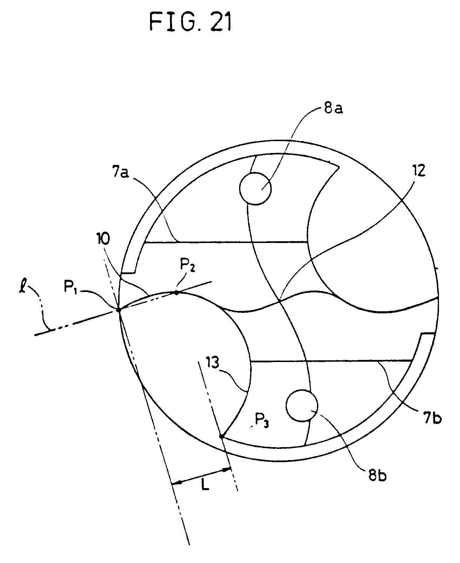

Further, at the cutting lips of the hard tip 9, thinning has been made. In portions 11 formed by the thinning treatment, as shown by hatched regions in Fig. 5, are so formed that the width of a chisel 12 is in the range of 0―0.4 mm, that cutting lips 21 formed in the web and corresponding to chisel lips are substantially straight and that the angle θ₁ between the cutting lip 21 forms with the peripheral cutting lip 10 is set in the range of 35° to 45°. Further, a connecting portion 22 between the cutting lip 21 of the web and the outer cutting lip 10 is so formed as to describe a convex arc with respect to the direction of rotation of the drill structure 1. Further, the axial rake angle θ₂ of a rake surface 23 of Fig. 19 formed by thinning is set in the range of -5° to +5°, and the axial length of said rake surface 23 is 0 mm at the drill axis position. An intersection line 25 defined between the rake surface 23 and an adjacent ground surface 24 of Fig. 20 formed simultaneously with said rake surface 23 by thinning has an angle of inclination θ₃ which is in the range of 25° to 60° with respect to the drill axis.

The function of the above embodiment described with reference to Figs. 1 through 5 and Figs. 19 and 20 will now be described.

When the drill structure 1 is used for drilling, e.g., a steel product, it will be seen that since the hard tip 9, at the cutting end of the drill body 4, secures accuracy of symmetry with respect to the center of rotation, the resulting vibration is much less than in a conventional cemented carbide drill whose cutting tip is bisected. Further, the hard tip 9 is made of such hard material as cemented carbide alloy, CBN sintered compact or high speed steel and hence cutting by the cutting lips 10 can be performed as desired. Further, the drill body 4, which is made of high speed steel or alloy steel, has sufficient rigidity and toughness. Thus, the drill structure 1 has both the necessary cutting capability and the necessary strength, so that satisfactory cutting can be effected.

In the cutting portion 6, because of the use of the plate-like hard tip 9, a lateral wall portion 13 unconnected to the cutting lip 10 (the lateral wall portion being formed on the drill body 4) can be formed so that it is curved, as shown in Fig. 5. This forces chips to finely curl, with the consequent smooth ejection of chips.

Further, the thickness of the hard tip, e.g., its length axially of the drill structure, is greater than the web thickness. Thus, in the front ends of the chip ejection flutes 5, most of the lateral walls facing the flute are made of hard material, so that damage due to the rubbing of chips can be prevented. In the conventional drill structure, chips rub against the chip ejection flutes, abrading the lateral walls of the chip ejection flutes, which can result in breaking the walls of the oil passage. With the drill structure 1 of this embodiment, however, no such problem can take place since the hard tip 9 has the aforesaid thickness.

The function of the shape of the cutting portion in this embodiment will now be described.

As described above, the web thickness is set in the range of 25―35% of the drill diameter. The reason is that setting is at less than 25% would result in a lack of rigidity while setting it at more than 35% would result in detracting from chip ejection capability.

The flute width ratio is set in the range 0.1:1 to 0.8:1. The reason is that this ensures that the curling or breaking of chips produced by the cutting lips 10 takes place most smoothly.

Further, if the radial rake angle of each outer cutting lip 10, as seen in end view, measured at position spaced at least 2/3 of the drill daimeter outwardly from the drill center is negative, this would result in an increase in cutting resistance and a decrease in rigidity. Reversely, if the positive rake angle is increased, the strength of the outer peripheral portion of the cutting lip 10 would decrease. Thus, taking these opposite factors into account, this invention specifies that the aforesaid radial rake angle be in the range of -5° to positive, preferably in the range of 0 -10°.

The reason why the positions at which the radial rake angle is set in the range of -5° to positive are defined as being spaced at least 2/3 of the diameter of the drill, is that if the web thickness is 30 %, then the length of the cutting lip 10 is about 2/3; thus, if more than 1/2 of the cutting lip 10 has positive rake angles, sufficient performance can be attained.

In the case where the cutting lip 10 is given a concavely arcuate form so that the rake angle in the outer peripheral region is in the range of -5° to positive, as shown in Fig. 5, the production of chips will be shared by the longer portion of the cutting lip 10. Therefore, in the case of the cutting lip 10 of this embodiment, as compared with a straight cutting edge, chips can be smoothly ejected and the cutting chip 10 is lengthened, so that work to be done per unit length of the cutting lip is decreased, leading to an increase in wear resistance.

As described above, in the drill structure of this embodiment, the web is thicker than in the case of common twist drills. Therefore, if the chisel width is not decreased by proper thinning, the cutting resistance would increase to the extent of crushing the front end. In the drill of this embodiment, therefore, the portions 11 formed by thinning have a cross-thinning configuration (see Fig. 5). The chisel 12 has a width in the range of 0―0.4 mm, the cutting lip 21 of the web portion is substantially linear, and the angle θ₁ formed between said cutting lip 21 and the outer cutting lip 10 is set in the range of 35° to 45°. The connecting portion 22 between the cutting lip 21 of the web portion and the outer cutting lip 10 is formed to described a convex arc with respect to the direction of rotation of the drill structure 1. Therefore, vibration which occurs during drilling is reduced and chips tend to curl more easily, so that ejection of chips is promoted.

The axial rake angle θ₂ of the rake surface 23 of the web portion formed by thinning is set in the range of -5° to +5°. The axial length of the rake surface 23 is 0 mm at the drill axis position. The intersection line 25 between the rake surface 23 and the adjacent take-out surface 24 formed simultaneously with the rake surface 23 has an angle of inclination θ₃ with the drill axis in the range of 25° to 60°. Therefore, the angle of inclination θ₃ is such that the axial length of the rake surface 23 is sufficient to prevent chips being produced from striking the adjacent ground surface 24 to increase thrust and such that the chip breaking function and the strength of the drill structure are sufficient.

Experiments with the drill structure of the embodiment of this invention will now be described.

The following experiments were made with the drill structure of the embodiment and with drill structures of comparative examples 1 and 2 prepared for comparison purposes, as shown in Table 1 below.

**TABLE 1**

| Drill | Web thickness in mm | Flute width ratio | Rake angle in degrees | Relative distance |
|---|---|---|---|---|
| Embodiment | 5.6 | 0.42:1 | +10° | 0.16×D |
| Comparative example 1 | 5.6 | 0.42:1 | -12° | 0.29×D |
| Comparative example 2 | 3.5 | 0.9:1 | -7° | 0.5×D |

In addition, the relative distance in Table 1 refers to a distance L from point P3 on the flute wall opposed to the cutting lip 10 to a perpendicular line dropped at point P1 on an imaginary reference line l which connects the point P1, which is at the outer peripheral end of the cutting lip 10, and point P2 on the cutting lip 10 spaced 2/3 of the radius from the axis toward the outer periphery, as shown in Fig. 21.

Comparative example 1 is not generally used but was prepared as a model sample to represent a typical manner for comparison purposes. The diameter of each drill was 20 mm and the cutting tip material was cemented carbide alloy P30 plus TiCN coating

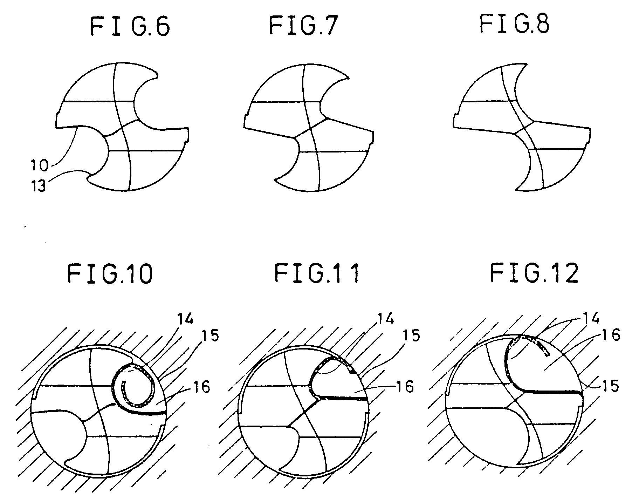

The cutting end configuration of each drill was as shown in Fig. 6 for the embodiment, Fig. 7 for the comparative example 1 and Fig. 8 for the comparative example 2.

### First Experiment (Drilling test)

Experimental conditions: cutting speed (V)=60 m/min, feed (f)=0.5 mm/rev, penetration length=60 mm. Material to be cut: SCM 440, Hb=300, with water-soluble cutting oil used.

The results were as shown in Table 2.

**TABLE 2**

| Drill | Number of holes drilled until breakage | |
|---|---|---|
| | First time | Second time |
| Embodiment | 205 holes were successfully drilled | 190 holes |
| Comparative example 1 | 188 holes | 95 holes |
| Comparative example 2 | 10 holes | 88 holes |

In addition, the comparative example 1 had a high strength and sometimes provided data comparable to that for the embodiment, but was poor in chip disposal and its cutting resistance was so high that it broke.

Further, the comparative example 2, though satisfactory in chip disposal and cutting resistance, was low in strength.

Thus, so far as the result of this drilling test is concerned, it is seen that the drill of the embodiment of this invention is superior to the drills of the comparative examples 1 and 2.

### Cutting resistance test

The embodiment and comparative examples 1 and 2 were tested for cutting resistance. The result was as shown in Fig. 9 in which feed (mm/rev) is plotted on the horizontal axis and on the vertical axis are plotted thrust (Kg), torque (Kg-cm) and horse power (HP).

In Table 3 drawn up on the basis of this graph, values are expressed in terms of proportion when the respective values for the conventional drill of the comparative example 2 are taken as unity.

**TABLE 3**

| Drill | Thrust | Torque | Horse power |
|---|---|---|---|
| Embodiment | 1.28 | 0.98 | 0.97 |
| Comparative example 1 | 1.42 | 1.08 | 1.06 |
| Comparative example 2 | 1 | 1 | 1 |

In this experiment, S 48C (Hb 230) was used as the material to be cut and water-soluble cutting oil as the cutting oil.

It can be seen from the result of this test that with the comparative examples 1 and 2, even if the cross-sectional area is increased while the flute width ratio is decreased and the web thickness is increased so as to increase the strength, both thrust and torque increase and so does the horse power, a fact which means a reverse effect. In contrast, with the drill of the embodiment of the invention, it is seen that since the web thickness is increased, the thrust slightly increases but the torque and horse power decrease and so does the cutting resistance.

That is, although the web thickness is increased and a thrust increase of about 30% is caused, the radial rake angle of about 10° results in substantial decreases in both torque and horse power.

Of course, since the conventional drill of the comparative example 1 has a radial rake angle of -12°, both torque and horse power are high and so is the thrust; thus, it is not a satisfactory drill.

The roughness of the cut finished surface will now be described. In the drill of the embodiment of this invention, the design which makes the radial rake angle positive improves the sharpness of the drill, and the short, relative distance L ensures that a chip 14 curls in the hole 16 without abutting against the hole wall 15 and is discharged in the hole 16 as shown in Fig. 10 or discharged while being broken.

On the other hand, in the comparative examples 1 and 2, since the relative distance L is long and since the sharpness is not good, the chip 14 abuts against the hole wall 15 and breaks and hence the cut finish is rough.

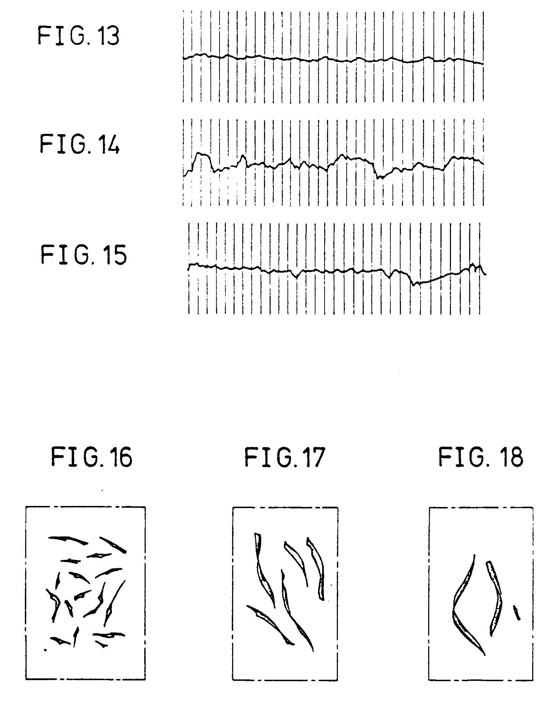

The data on the finished surface roughness is as shown in Figs. 13, 14 and 15.

In addition, in Figs. 13, 14 and 15, the scale on the horizontal axis (depth) is magnified 10 times and the scale on the vertical axis (radial unevenness) 250 times.

As can be seen from each figure, the finished surface obtained by the drill of the embodiment of this invention is very good.

It is seen also from Figs. 16, 17 and 18 that since the relative distance is short and since the sharpness is good, the chip 14 curls in the hole 16 and breaks into small pieces which then also curl at small radii.

Thus, it is seen also from this fact that in the drill of the embodiment of this invention, the chip 14 breaks into small pieces and curls and is discharged in the hole 16. As is clear also from the aforesaid experimental data, the finished surface is good without being roughened and there is no danger of making a hole in the flute wall 13.

It is clear that the small the allowance for enlarging the hole 16 and the small the amount of variation thereof, the higher the drilling accuracy, experimental data being as shown in Table 4.

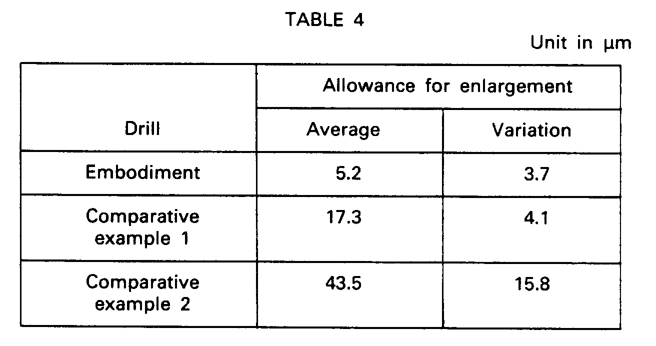

Because of the combination of the effect of the rake angle being positive and the effect of the twisting strength and rigidity and bending rigidity being high and the accuracy of symmetry with respect to the center of tip 9 being sufficiently secured, the allowance for enlargement of drill holes is much less in the drill of the embodiment of this invention than in the conventional drill, and it is also seen that the variation of allowance is less, proving the superiority of the drill of this embodiment of the invention.

As a matter of course, the amount of burr which forms when the drill thrusts through the work indicates the effect of sharpness, the test result being as shown in Table 5.

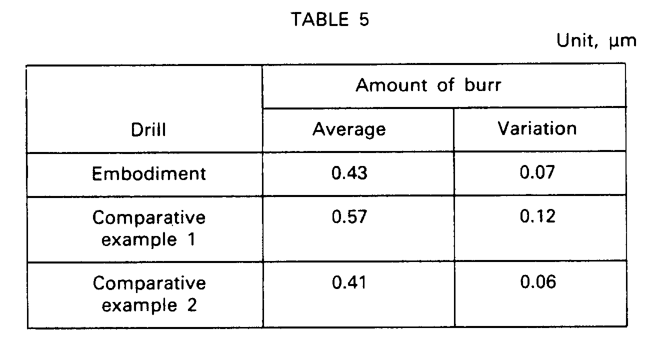

As can be seen from this data, in the embodiment the sharpness does not so much differ from that in the comparative example 2, but its variation is much less, thus indicating that it is possible to improve the accuracy of product where the drill is repeatedly used.

The overall ratings of the respective drills are as shown in Table 6. The mark X means "undesirable", the mark ○ means "desirable", and the mark ⓞ means "superior". Thus, it is seen that the drill of this embodiment is the best of all, next comes the heretofore actually used drill of the comparative example 2, and the worst is the drill of the comparative example 1 produced merely as a model.

**TABLE 6**

| Drill | Strength | Cutting force | Finished surface | Chips | Allowance for enlargement | Burr | Overall rating |
|---|---|---|---|---|---|---|---|
| Embodiment | ⓞ | ○ | ⓞ | ⓞ | ⓞ | ○ | ⓞ |
| Comparative example 1 | ○ | X | X | X | ○ | X | X |
| Comparative example 2 | X | ⓞ | ○ | ⓞ | X | ⓞ | ○ |

In addition, actually usable samples for use in various tests in this invention were produced for comparision with samples of conventional form, the particulars of these samples being as shown in Table 7. Apart from effectiveness, these samples were capable of actual use.

**TABLE 7**

| | Web thickness | Flute width ratio | Rake angle | Relative distance |
|---|---|---|---|---|
| Conventional article | 15% | 1:1 | -8.5° | 0.48×D |
| | 23% | | -17° | 0.48×D |
| | 15% | 1.3:1 | -8.5° | 0.6 ×D |
| | 23% | | -17° | 0.58×D |
| Inventive article | 25% | 0.8:1 | -5° | 0.47×D |
| | | | 0° | 0.42×D |
| | | | +10° | 0.31×D |
| | 35% | 0.4:1 | -5° | 0.23×D |
| | | | 0° | 0.18×D |
| | | | +10° | 0.11×D |

Although the present invention has been described and illustrated in detail, it is clearly understood that the same is by way of illustration and example only and is not to be taken by way of limitation, the scope of the present invention being limited only by the terms of the appended claims.

## Claims

1. Spiral drill having the following features:
(a) the drill (1) has two flutes (5);
(b1) the drill comprises a drill body (4) with a one-piece tip (9) harder than the body,
(b2) the tip comprises cutting lips and is fitted and fixed in a groove (7), with opposite parallel flat side walls (7a,7b), which is formed in the front end of said drill body (4);
(c1) the web thickness is 25-35% of the drill diameter (D);
(c2) the flute-to-land peripheral length ratio is in the range of 0,4:1 to 0,8:1;
(c3) the front end of the drill (1) is formed so that in each point in the portion of the cutting lip (10) being spaced at least 1/3 of the drill diameter (D) radially outward from the axis of the drill the respective radial rake angle is in the range of -5° to positive in an increasing sense when considering subsequent points along the cutting lip in a radially outward direction of view, wherein,
(c4) the portion of the cutting lip (10) spaced at least 1/3 of the drill diameter toward the outer peripheral side is concave arcuate,
(c5) the distance L < 47% of the drill diameter (D) seen in an end view of the cutting end, wherein:
- a straight line (l) is defined by two points P1 and P2,
- P1 = outer circumferential point of the cutting lip (10),
- P2 = point on the cutting lip (10) having a distance of 2/3 of the radius from the axis of the drill,
- a line is drawn through point P1 perpendicular to the straight line (l),
- P3 = outer circumferential point of the flute wall (13), and
- L = the distance of the perpendicular line to point P3,
(c6) said hard tip (9) consists of cemented carbide alloy and has been subjected to a thinning treatment, and the width of the chisel formed by said thinning is in the range of 0-0.4 mm, and the cutting lips (21) formed on the web portion when viewed from the front end of said drill structure are substantially straight, and the angle (θ₁) between each of said cutting lips and the respective outer peripheral cutting lip (10) formed on the outer periphery of the drill structure is in the range of 35°-45°, and the connecting portion between each cutting lip (21) of said web portion and the respective outer peripheral cutting lip (10) is in the form of a convex arc with respect to the direction of rotation of the drill structure,
(c7) the axial rake angle (θ₂) of the cutting lip (21) of the web portion formed by thinning is in the range of -5° to +5° and the length of said rake surface (23) in the direction of the axis of the drill structure is 0 mm at the axis position, and the intersection line between said rake surface and the adjacent ground surface (24) which is simultaneously formed by said thinning forms an angle (θ₃) in the range of 25°-60° with the axis of the drill structure.

2. A drill as set forth in claim 1, wherein the thickness of said hard tip (9) is greater than said web thickness.

3. A drill as set forth in claim 1, wherein an oil passage (81,8b) is formed through the drill structure, said oil passage extending from the rear end of the drill body to the end surface of the front end of the drill structure, said oil passage being so formed as not to contact the cutting lips at the end surface of the front end of the drill structure.

4. A drill as set forth in claim 1, wherein at least said hard tip (9) is coated with a compount selected from TiC, TiCN, TiN or Al₂O₃.

## Patentansprüche

1. Spiralbohrer mit den folgenden Merkmalen:
(a) der Bohrer (1) hat zwei Spannuten (5);
(b1) der Bohrer weist einen Bohrerkörper (4) mit einer einstückigen Spitze (1) auf, die härter ist als der Körper,
(b2) die Spitze weist Schneidkanten auf und ist eingesetzt und befestigt in einer Nut (7) mit gegenüberliegenden paralellen flachen Seitenwänden (7a, 7b), die in dem vorderen Ende des Bohrerkörpers (4) ausgebildet ist;
(c1) die Kerndicke beträgt 25 bis 35% des Bohrerdurchmessers (D);
(c2) das Verhältnis von Spannut zu Stegumfangslänge ist im Bereich von 0,4 : 1 bis 0,8 : 1;
(c3) das Vorderende des Bohrers (1) ist so geformt, daß in jedem Punkt in dem Teil der Schneidkante (10), der zumindest um 1/3 des Bohrerdurchmessers (D) radial auswärts von der Achse des Bohrers beabstandet ist, der jeweilige radiale Spanwinkel im Bereich von -5° zum Positiven hin in einem zunehmenden Sinn liegt, wenn nachfolgende Punkte entlang der Schneidkante in einer radial auswärts gerichteten Blickrichtung betrachtet werden, wobei
(c4) der Teil der Schneidkante (10), der zumindest 1/3 des Bohrerdurchmessers nach der äußeren Umfangsseite beabstandet ist, konkav bogenförmig ist,
(c5) der Abstand L < 47 % des Bohrerdurchmessers (D) beträgt, gesehen in einer Endansicht des Schneidendes, wobei:
- eine gerade Linie (l) durch die beiden Punkte P1 und P2 definiert ist,
- P1 = äußerer Umfangspunkt der Schneidkante (10) ist,
- P2 = Punkt auf der Schneidkante (10) mit einem Abstand von 2/3 des Radius von der Achse des Bohrers ist,
- eine Linie durch den Punkt P1 rechtwinklig zu der geraden Linie (l) gezogen ist,
- P3 = äußerer Umfangspunkt der Spannutwandung (13) ist,
- L = der Abstand der rechtwinkligen Linie vom Punkt P3 ist,
(c6) die harte Spitze (9) aus Hartmetallegierung besteht und einer Ausspitzungsbehandlung unterzogen worden ist, und daß die Breite der Querschneide, gebildet durch dieses Ausspitzen im Bereich von 0 bis 0,4 mm beträgt und die Schneidkanten (21) ausgebildet an dem Kernabschnitt, wenn gesehen von dem Vorderende der Bohrerstruktur, im wesentlichen gerade sind, und der Winkel (θ₁) zwischen jeder der Schneidkanten und der jeweiligen äußeren Umfangsschneidkante (10) ausgebildet am Außenumfang der Bohrerstruktur, im Bereich von 35° bis 45° liegt, und der Verbindungsabschnitt zwischen jeder Schneidkante (21) des Kernabschnittes und der jeweiligen äußeren Umfangsschneidkante (10) in Form eines konvexen Bogens in Bezug auf die Drehrichtung der Bohreranordnung ausgebildet ist,
(c7) der axiale Spanwinkel (θ₂) der Schneidkante (21) des Kernabschnittes, gebildet durch Ausspitzen, im Bereich von -5° bis +5° liegt und die Länge der Spanfläche (23) in Richtung der Achse der Bohreranordnung in der Achsposition 0 mm beträgt, und die Schnittlinie zwischen der Spanfläche und der benachbarten geschliffenen Fläche (24), die gleichzeitig durch die Ausspitzung gebildet ist, einen Winkel (θ₃) im Bereich von 25° bis 60° mit der Achse der Bohreranordnung bildet.

2. Bohrer nach Anspruch 1, bei dem die Dicke der harten Spitze (9) größer ist als die Kerndicke.

3. Bohrer nach Anspruch 1, bei dem ein Ölkanal (81, 8b) durch die Bohreranordnung ausgebildet ist, wobei der Ölkanal sich vom hinteren Ende des Bohrerkörpers zu der Endoberfläche des Vorderendes der Bohreranordnung erstreckt, wobei der Ölkanal so ausgebildet ist, daß er nicht die Schneidkanten an der Endoberfläche des Vorderendes der Bohreranordnung berührt.

4. Bohrer nach Anspruch 1, bei dem zumindest die harte Spitze (9) mit einer Verbindung, ausgewählt aus TiC, TiCN, TiN oder Al₂O₃ beschichtet ist.

## Revendications

1. Foret hélicoïdal ayant les particularités suivantes :
(a) le foret (1) comporte deux goujures (5) ;
(b1) le foret comprend un corps de foret (4) avec un embout d'une pièce (9) plus dur que le corps,
(b2) l'embout comprend des lèvres de coupe et il est encastré et fixé dans une rainure (7), avec les parois latérales plates parallèles opposées (7a, 7b), qui est formée dans l'extrémité avant du corps de foret (4) ;
(c1) l'épaisseur de l'âme est de 25-35 % du diamètre de foret (D) ;
(c2) le rapport entre la goujure et la longueur périphérique extérieure se situe dans la plage de 0,4:1 à 0,8:1 ;
(c3) l'extrémité avant du foret (1) est formée de telle sorte qu'en chaque point de la portion de la lèvre de coupe (10) étant espacé d'au moins 1/3 du diamètre de foret (D) radialement vers l'extérieur à partir de l'axe du foret, l'angle d'inclinaison radial respectif se situe dans la plage de -5° par rapport à l'angle positif dans un sens croissant lorsqu'on considère les points successifs le long de la lèvre de coupe dans une direction de vue radialement vers l'extérieur, dans lequel,
(c4) la portion de la lèvre de coupe (10) espacée d'au moins 1/3 du diamètre de foret vers le côté périphérique extérieur est arquée, concave,
(c5) la distance L < 47 % du diamètre de foret (D) vu dans une vue d'extrémité de l'extrémité de coupe, dans laquelle :
- une ligne droite (ℓ) est définie par deux points P1 et P2,
- P1 = point circonférentiel extérieur de la lèvre de coupe (10),
- P2 = point sur la lèvre de coupe (10) ayant une distance de 2/3 du rayon par rapport à l'axe du foret,
- une ligne est tracée par le point P1 perpendiculaire à la ligne droite (ℓ),
- P3 = point circonférentiel extérieur de la paroi de goujure (13), et
- L = distance de la ligne perpendiculaire au point P3,
(c6) l'embout dur (9) consiste en un alliage de carbure cémenté et a été soumis à un traitement d'amincissement et la largeur du ciseau formé par l'amincissement se situe dans la plage de 0-0,4 mm et les lèvres de coupe (21) formées sur la portion d'âme vues à partir de l'extrémité avant de la structure de foret sont sensiblement droites et l'angle (θ₁) entre chacune des lèvres de coupe et la lèvre de coupe périphérique extérieure respective (10) formée sur la périphérie extérieure de la structure de foret se situe dans la plage de 35°-45°, et la portion de raccordement entre chaque lèvre de coupe (21) de la portion d'âme et la lèvre de coupe périphérique extérieure respective (10) se présente sous forme d'un arc convexe par rapport à la direction de rotation de la structure de foret,
(c7) l'angle d'inclinaison axial (θ₂) de la lèvre de coupe (21) de la portion d'âme formée par amincissement se situe dans la plage de -5° à +5° et la longueur de la surface d'inclinaison (23) dans la direction de l'axe de la structure de foret est de 0 mm sur la position d'axe et la ligne d'intersection entre la surface d'inclinaison et la surface de dépouille contiguë (24) qui est simultanément formée par l'amincissement forme un angle (θ₃) dans la plage de 25°-60° avec l'axe de la structure de foret.

2. Foret selon la revendication 1, dans lequel l'épaisseur de l'embout dur (9) est supérieure à l'épaisseur de l'âme.

3. Foret selon la revendication 1, dans lequel un passage d'huile (81, 8b) est formé à travers la structure de foret, ce passage d'huile s'étendant à partir de l'extrémité arrière du corps de foret vers la surface d'extrémité de l'extrémité avant de la structure de foret, le passage d'huile étant formé de telle sorte à ne pas venir en contact avec les lèvres de coupe à la surface d'extrémité de l'extrémité avant de la structure de foret.

4. Foret selon la revendication 1, dans lequel au moins l'embout dur (9) est revêtu d'un composé choisi parmi TiC, TiCN, TiN ou Al₂O₃.
